# EUROPÄISCHE PATENTANMELDUNG

(11) **EP 3 440 934 A1**
(43) Veröffentlichungstag der Anmeldung: **13.02.2019**
(21) Anmeldenummer: 18401067.6
(22) Anmeldetag: 01.08.2018
(51) Int. Cl.: A01M 7/00

(54) **STEUER- UND/ODER REGELSYSTEM, LANDWIRTSCHAFTLICHES NUTZFAHRZEUG UND VERFAHREN ZUR STEUERUNG UND/ODER REGELUNG**

(30) Priorität: 07.08.2017 DE 102017117832
(71) Anmelder: Amazonen-Werke H. Dreyer GmbH & Co. KG, 49205 Hasbergen (DE)
(72) Erfinder: große Prues, Frank, 49593 Bersenbrück (DE); Kowollik, Daniel, 47443 Moers (DE); Bunge, Lukas, 48291 Telgte (DE)

(57) **Zusammenfassung**

Die Erfindung betrifft ein Steuer- und/oder Regelsystem für ein landwirtschaftliches Nutzfahrzeug (1), welches ein Verteilergestänge (4) zum Ausbringen von Material, wie Düngemittel, Pflanzenschutzmittel oder Saatgut umfasst, welches sich quer zur Fahrtrichtung erstreckt und ein Mittelteil (2) und zwei mit dem Mittelteil (2) durch Gelenke verbundene seitliche Ausleger (3) aufweist. Die seitlichen Ausleger (3) umfassen mehrere zueinander in Transportstellung einklappbare und in der Arbeitsstellung ausklappbare, durch Gelenke verbundene Gestängeabschnitte (6a, b), wobei zwei benachbarte durch Gelenke verbundene Gestängeabschnitte (6a, b) einen inneren (6b) und äußeren (6a) Gestängeabschnitt in Bezug auf das Mittelteil (2) umfassen. Das Mittelteil ist zur Höhenverstellbarkeit des Verteilergestänges (4) entlang einer vertikalen Achse bewegbar angeordnet. Jedem Gestängeabschnitt (6a, b) ist wenigstens eine Stelleinrichtung zugeordnet, wodurch der jeweilige Gestängeabschnitt (6a, b) um eine horizontale Achse schwenkbar ist. Dem Verteilergestänge (4) sind weiterhin mehrere Sensoren (5) zur Ermittlung des Abstandes des Mittelteils (2) und des jeweiligen Gestängeabschnitts (6a, b) zum Boden zugeordnet und das System weist weiterhin eine Datenverarbeitungseinheit auf, welche derart konfiguriert ist, dass die Signale der Sensoren (5) verarbeitet werden und auf deren Basis ein Stellsignal für die jeweilige Stelleinrichtung generiert wird. Ein An-/Abwinkeln des äußeren Gestängeabschnitts (6a) ist in Abhängigkeit von einer Neigungsverstellung des Verteilergestänges (4) oder einem An-/Abwinkeln des inneren Gestängeabschnitts (6b) vorsteuerbar, derart, dass das An-/Abwinkeln des äußeren Gestängeabschnitts (6a) an die Neigungsverstellung oder das An-/Abwinkeln des inneren Gestängeabschnitts (6b) gekoppelt ist.

## Beschreibung

Die Erfindung betrifft ein Steuer- und/oder Regelsystem für ein landwirtschaftliches Nutzfahrzeug gemäß dem Patentanspruch 1. Ferner betrifft die Erfindung ein landwirtschaftliches Nutzfahrzeug sowie ein Verfahren zur Steuerung und/oder Regelung eines landwirtschaftlichen Nutzfahrzeuges.

Derartige Systeme werden für landwirtschaftliche Nutzfahrzeuge zum Ausbringen von Material, wie Düngemittel, Pflanzenschutzmittel oder Saatgut verwendet. Um das Material großflächig und effizient auf dem zu bearbeitenden Feldboden auszubringen, weisen die landwirtschaftlichen Nutzfahrzeuge ein Verteilergestänge mit mehreren Sprühdüsen auf. Das Verteilergestänge erstreckt sich quer zur Fahrtrichtung und kann Arbeitsbreiten von bis zu 50 m aufweisen. Die Sprühdüsen, welche in regelmäßigem Abstand am Verteilergestänge angebracht sind, dienen der Ausbringung des Materials auf den zu bearbeitenden Boden. Dabei soll der Abstand zwischen dem Verteilergestänge und dem Boden über die gesamte Arbeitsbreite möglichst konstant bleiben. Das bedeutet, dass das Verteilergestänge möglichst parallel zum zu bearbeitenden Boden gehalten wird.

Bekanntermaßen weist das Verteilergestänge ein Mittelteil, beispielhaft einen mittig angeordneten Rahmen, und zwei mit dem Mittelteil verbundene seitliche Ausleger mit mehreren zueinander in Transportstellung einklappbaren und in Arbeitsstellung ausklappbaren, durch Gelenke verbundene Gestängeabschnitte auf. Die Ausleger können hierbei wenigstens zwei benachbarte durch Gelenke verbundene Gestängeabschnitte aufweisen. Jeweils zwei benachbarte Gestängeabschnitte umfassen einen inneren und äußeren Gestängeabschnitt in Bezug auf das Mittelteil. Mit anderen Worten liegt der jeweilige innere Gestängeabschnitt näher an dem Mittelteil als der äußere Gestängeabschnitt. Die Entfernung des inneren Gestängeabschnitts zum Mittelteil ist also kleiner als die Entfernung des äußeren Gestängeabschnitts. Der äußere Gestängeabschnitt kann im Rahmen der Anmeldung auch den letzten außen liegenden Gestängeabschnitt des jeweiligen Auslegers bilden. Das Mittelteil ist zur Höhenverstellbarkeit des Verteilergestänges entlang einer vertikalen Achse bewegbar angeordnet.

Im Betrieb des landwirtschaftlichen Nutzfahrzeuges mit einer derartigen Arbeitsbreite kann es beispielsweise aufgrund des Überfahrens von Unebenheiten im Boden oder auftretenden Beschleunigungen des Nutzfahrzeuges zu Auslenkungen des Verteilergestänges oder, anders gesagt, zu einer Neigung des Verteilergestänges kommen. Aufgrund derartiger Neigungen können sehr hohe Kräfte am Verteilergestänge auftreten und eine homogene Materialausbringung kann nicht mehr garantiert werden. Es ist bekannt, Stelleinrichtungen zwischen dem Mittelteil und den Auslegern, bzw. zwischen den Gestängeabschnitten anzuordnen, derart, dass einer Neigung des Verteilergestänges entgegengewirkt werden kann. Die Gestängeabschnitte können mittels der Stelleinrichtungen schwenkbar um eine horizontale Achse in Fahrtrichtung angeordnet sein. Dem Verteilergestänge sind bekanntermaßen mehrere Sensoren zur Ermittlung des Abstandes des Mittelteils und des jeweiligen Gestängeabschnitts zum Boden zugeordnet. Dabei erfassen die Sensoren die aktuellen Istwerte bezüglich des jeweiligen Abstandes zum Boden. Die Istwerte werden an eine Datenverarbeitungseinheit weitergeleitet. Die Datenverarbeitungseinheit ist dabei derart konfiguriert, dass die Signale der Sensoren verarbeitet werden und auf deren Basis ein Stellsignal für die Stelleinrichtungen generiert wird. Die Datenverarbeitungseinheit kann generell durch eine elektronische Vorrichtung gebildet sein, welche derart konfiguriert ist, dass ein Soll-Ist-Wert-Vergleich durchgeführt werden kann und auf dessen Grundlage ein Stellsignal zur Verschwenkung des jeweiligen Gestängeabschnitts, bzw. des Auslegers, ausgegeben wird. Eine Regelung der Stellbewegung eines einzelnen Gestängeabschnitts bzw. des Verteilergestänges kann unter Einbeziehung aller gemessenen Sensorsignale zeitintensiv sein. Weiterhin kann aufgrund der Gelenkverbindung der benachbarten Gestängeabschnitte, eine auftretende Auslenkung eines inneren Gestängeabschnitts zu einer unerwünschten Auslenkung des benachbarten äußeren Gestängeabschnitts führen, weshalb der gewünschte Abstand des Verteilergestänges zum Boden nicht eingehalten werden kann.

Der Erfindung liegt daher die Aufgabe zugrunde, ein Steuer- und/oder Regelsystem der eingangs genannten Art dahingehend zu verbessern, dass möglichst schnell eine präzise Anpassung der Ausleger, bzw. der einzelnen Gestängeabschnitte an unterschiedliche Bodenkonturen gewährleistet werden kann. Der Erfindung liegt ferner die Aufgabe zugrunde, ein landwirtschaftliches Nutzfahrzeug sowie ein Verfahren zur Steuerung und/oder Regelung eines landwirtschaftlichen Nutzfahrzeuges anzugeben.

Diese Aufgabe wird erfindungsgemäß durch ein Steuer- und/oder Regelsystem mit den Merkmalen des Anspruchs 1 gelöst. Im Hinblick auf das landwirtschaftliche Nutzfahrzeug wird die Aufgabe durch den Gegenstand des Anspruchs 10 gelöst. Ferner wird die Aufgabe im Hinblick auf das Verfahren durch den Gegenstand des Anspruchs 11 gelöst.

Die Erfindung beruht auf dem Gedanken, ein Steuer- und/oder Regelsystem für ein landwirtschaftliches Nutzfahrzeug anzugeben, welches ein Verteilergestänge zum Ausbringen von Material, wie Düngemittel, Pflanzenschutzmittel oder Saatgut umfasst, welches sich quer zur Fahrtrichtung erstreckt und ein Mittelteil und zwei mit dem Mittelteil durch Gelenke verbundene seitliche Ausleger aufweist. Die seitlichen Ausleger umfassen mehrere zueinander in Transportstellung einklappbare und in der Arbeitsstellung ausklappbare, durch Gelenke verbundene Gestängeabschnitte, wobei zwei benachbarte durch Gelenke verbundene Gestängeabschnitte einen inneren und äußeren Gestängeabschnitt in Bezug auf das Mittelteil umfassen. Das Mittelteil ist zur Höhenverstellbarkeit des Verteilergestänges entlang einer vertikalen Achse bewegbar angeordnet. Jedem Gestängeabschnitt ist wenigstens eine Stelleinrichtung zugeordnet, wodurch der jeweilige Gestängeabschnitt um eine horizontale Achse schwenkbar ist. Dem Verteilergestänge sind weiterhin mehrere Sensoren zur Ermittlung des Abstandes des Mittelteils und des jeweiligen Gestängeabschnitts zum Boden zugeordnet und das System weist weiterhin eine Datenverarbeitungseinheit auf, welche derart konfiguriert ist, dass die Signale der Sensoren verarbeitet werden und auf deren Basis ein Stellsignal für die jeweilige Stelleinrichtung generiert wird. Ein An-/Abwinkeln des äußeren Gestängeabschnitts ist in Abhängigkeit von einer Neigungsverstellung des Verteilergestänges und/oder einem An-/Abwinkeln des inneren Gestängeabschnitts vorsteuerbar, derart, dass das An-/Abwinkeln des äußeren Gestängeabschnitts an die Neigungsverstellung oder das An-/Abwinkeln des inneren Gestängeabschnitts gekoppelt ist.

Die Erfindung hat den Vorteil, dass sich durch das vorsteuerbare An-/Abwinkeln des äußeren Gestängeabschnitts als Reaktion auf eine Neigungsverstellung des Verteilergestänges oder dem An-/Abwinkeln des inneren Gestängeabschnitts, der äußere Gestängeabschnitt bereits tendenziell in die notwendige Richtung zur Kompensation einer Auslenkung bewegen kann. Mit anderen Worten kann der äußere Gestängeabschnitt in die wahrscheinlich notwendige Richtung zur Kompensation der Auslenkung bewegt werden. Somit kann effizient das Verteilergestänge in einer parallelen Lage zum zu bearbeitenden Boden gehalten werden. Das vorsteuerbare An-/Abwinkeln des äußeren Gestängeabschnitts beschleunigt somit die Bewegung des äußeren Gestängeabschnitts in die wahrscheinlich notwendige Richtung, um die Ursache, nämlich die Auslenkung des Verteilergestänges oder des inneren Gestängeabschnitts, optimal zu kompensieren. Gleichzeitig können weitere Bewegungen in eine entgegengesetzte Richtung verzögert werden.

Insgesamt kann mittels des vorsteuerbaren An-/Abwinkelns des äußeren Gestängeabschnitts erreicht werden, dass eine Regelung der Neigungsverstellung des Verteilergestänges oder generell eine Regelung des An- und Abwinkelns der Gestängeabschnitte beschleunigt werden kann. Die Regelung kann mittels des vorsteuerbaren An-/Abwinkelns schneller angesprochen werden. Es ergibt sich daher ein generell ruhiger und gleichförmiger Bewegungsablauf des gesamten Verteilergestänges. Vorteilhafterweise können weiterhin vorhandene Regelungen der Bewegungsabläufe des Verteilergestänges agiler parametrisiert werden.

Das vorsteuerbare An-/Abwinkeln des äußeren Gestängeabschnitts unterscheidet sich im Rahmen der Anmeldung von einer Regelung eines An-/Abwinkelns des Gestängeabschnitts dadurch, dass das vorsteuerbare An-/Abwinkeln keinen Soll/Istwert-Vergleich umfasst. Die Vorsteuerung stellt eine automatisch einleitbare Steuerung des An-/Abwinkelns dar, wobei keine zusätzliche Auswertung von Istwerten und Anpassung an einen Sollwert von der Datenverarbeitungseinheit ausgeführt werden muss.

Im Rahmen der Anmeldung kann der Begriff der Stelleinrichtung sowohl hydraulische, als auch pneumatische, elektrische oder mechanische Systeme umfassen. Es ist hierbei denkbar, dass die Stelleinrichtung Stellorgane, wie beispielsweise Hydraulikzylinder, und/oder Ventileinheiten und/oder weitere Elemente umfasst.

In einer besonders bevorzugten Ausführungsform ist das vorsteuerbare An-/Abwinkeln des äußeren Gestängeabschnitts in entgegengesetzter Richtung zu der Neigungsverstellung des Verteilergestänges oder dem An-/Abwinkeln des inneren Gestängeabschnitts ausgerichtet. Ein An-/Abwinkeln des äußeren Gestängeabschnitts kann vorteilhaft gegensinnig zu der Neigungsverstellung oder dem An-/Abwinkeln des inneren Gestängeabschnitts erfolgen. Somit kann effizient verhindert werden, dass beispielhaft bei einer Auslenkung des inneren Gestängeabschnitts der äußere Gestängeabschnitt mit ausgelenkt wird. Durch das vorsteuerbare An-/Abwinkeln des äußeren Gestängeabschnitts in entgegengesetzter Richtung wird erreicht, dass sich der äußere Gestängeabschnitt als Reaktion auf die ursächliche Auslenkung bereits tendenziell in die notwendige Richtung mitbewegt, um die parallele Lage des Verteilergestänges zum Boden beizubehalten. Im Rahmen der Anmeldung kann der Begriff des Bodens gleichermaßen für den zu bearbeitenden Feldboden oder den Pflanzenbestand des Feldes verwendet werden.

Vorzugsweise ist das vorsteuerbare An-/Abwinkeln des äußeren Gestängeabschnitts von einer Regelung der Neigungsverstellung des Verteilergestänges oder dem An-/Abwinkeln des inneren Gestängeabschnitts unabhängig einleitbar. Anders gesagt kann das vorsteuerbare An-/Abwinkeln des äußeren Gestängeabschnitts autonom als Reaktion auf eine Neigungsverstellung oder ein An-/Abwinkeln des inneren Gestängeabschnitts eingeleitet werden. Dies kann unabhängig davon erfolgen, ob ein An-/Abwinkeln des äußeren Gestängeabschnitts zur Angleichung der parallelen Lage des Verteilergestänges zum Boden erforderlich ist oder nicht. Vorteilhafterweise kann somit der äußere Gestängeabschnitt tendenziell in die notwendige Richtung zur Kompensation einer Auslenkung des Verteilergestänges oder des inneren Gestängeabschnitts bewegt werden. Das vorsteuerbare An-/Abwinkeln des äußeren Gestängeabschnitts umfasst im Vergleich zur Regelung keinen Soll-Ist-Wert Abgleich. Demnach ist die Vorsteuerung von einer Regelung entkoppelbar und automatisch, sowie unabhängig von einer Regelung einleitbar.

In einer weiteren Ausführungsform ist die Neigungsverstellung des Verteilergestänges, basierend auf einem gemessenen Signal der Sensoren, welche den innen liegenden Gestängeabschnitten zugeordnet sind, oder einem anderweitig ermittelten Ist-Wert mittels eines Soll-Ist-Wert-Abgleichs einstellbar. Dabei ist das An-/Abwinkeln des äußeren Gestängeabschnitts in Abhängigkeit von der Neigungsverstellung vorsteuerbar. Die Sensoren sind vorzugsweise am jeweiligen inneren Gestängeabschnitt angeordnet bzw. diesem zugeordnet und/oder generell am Verteilergestänge angeordnet bzw. diesem zugeordnet. Vorteilhafterweise kann mittels der Sensoren der aktuelle Abstand des Gestängeabschnitts zum Boden bzw. eine auftretende Neigung des Verteilergestänges erfasst werden. Die Sensoren können hierzu beispielhaft als Abstandssensoren, insbesondere als Radar- oder Ultraschallsensoren, ausgebildet sein. Es können zusätzliche Sensoren am Verteilergestänge angebracht sein, welche als Lagesensoren, insbesondere als Potentiometer, ausgebildet sein können. Weiterhin ist generell jegliche Art von Sensor denkbar, welcher eine Positionserfassung bzw. eine Erfassung einer Auslenkung des jeweiligen Gestängeabschnitts oder des Verteilergestänges ermöglicht. Somit kann das Signal der Sensoren bezüglich des aktuellen Abstandes zum Boden als Istwert und/oder das Signal der weiteren Sensoren bezüglich der aktuellen Lage des Gestängeabschnitts als anderweitig ermittelter Istwert für den Soll-Ist-Wert-Abgleich verwendet werden. Die Neigungsverstellung des Verteilergestänges kann vorteilhafterweise mittels der innen liegenden Sensoren ermittelt werden.

Die Datenverarbeitungseinheit kann generell ein Auswerteprogramm aufweisen, welches die Signale der Sensoren als Eingangsgröße verarbeitet und auswertet. Die Datenverarbeitungseinheit ist beispielhaft derart konfiguriert, dass, basierend auf den Messsignalen der Sensoren, ein Soll-Ist-Wert-Abgleich ausgeführt werden kann. Basierend darauf kann ein Stellsignal für die jeweilige Stelleinrichtung generiert werden. Somit ist mittels des Soll-Ist-Wert-Abgleichs die Neigungsverstellung des Verteilergestänges mittels der jeweiligen Stelleinrichtung einstellbar. In Abhängigkeit von der Neigungsverstellung ist das An-/Abwinkeln des äußeren Gestängeabschnitts vorsteuerbar. Insbesondere kann ein An-/Abwinkeln des äußeren Gestängeabschnitts in entgegengesetzter Richtung zu der Neigungsverstellung erfolgen. Beispielhaft bedeutet dies, dass bei einer Neigungsverstellung des Verteilergestänges nach rechts, der linke äußere Gestängeabschnitt abgewinkelt und der rechte äußere Gestängeabschnitt angewinkelt werden kann. Anders gesagt, ist der linke äußere Gestängeabschnitt derart vorsteuerbar, dass bei einer Rechtsneigung des Verteilergestänges der linke äußere Gestängeabschnitt abgewinkelt wird. Der rechte äußere Gestängeabschnitt ist derart vorsteuerbar, dass bei einer Rechtsneigung des Verteilergestänges der rechte äußere Gestängeabschnitt angewinkelt wird. Somit kann effizient die parallele Ausgangslage der Gestängeabschnitte zum Boden gehalten werden.

In einer bevorzugten Ausführungsform ist die Neigungsregelung des Verteilergestänges, basierend auf einem gemessenen Signal der Sensoren, hinsichtlich einer auftretenden Druckänderung an der Stelleinrichtung und unter Berücksichtigung eines aufgrund einer Nickneigung des landwirtschaftlichen Nutzfahrzeuges auftretenden Druckoffsets einstellbar. Beispielhaft kann das Messsignal der Sensoren hinsichtlich einer auftretenden Druckänderung an der Stelleinrichtung unter Berücksichtigung eines Druckoffsets von der Datenverarbeitungseinheit ausgewertet werden. Der Druckoffset kann als Korrekturwert verwendet werden. Die Sensoren können beispielhaft als Drucksensoren ausgebildet sein. Mittels der Drucksensoren kann indirekt auf eine Lageänderung des jeweiligen Gestängeabschnitts rückgeschlossen werden. Durch die Berücksichtigung eines Druckoffsets kann eine extern wirkende Kraft auf das Verteilergestänge miteinbezogen werden. Derartige Kräfte können beispielsweise bei Nickneigungen des landwirtschaftlichen Nutzfahrzeuges in oder entgegengesetzt zur Fahrtrichtung auftreten. Die Kombination von verschiedenen Messwerten in der Datenverarbeitungseinheit ermöglicht generell eine sehr präzise Einstellung der Stelleinrichtung. Ebenso können etwaige auftretende Messungenauigkeiten kompensiert werden.

Vorzugsweise ist das An-/Abwinkeln des inneren Gestängeabschnitts, basierend auf einem gemessenen Signal der Sensoren, welche den jeweiligen inneren Gestängeabschnitten zugeordnet sind, oder einem anderweitig ermittelten Ist-Wert mittels eines Soll-Ist-Wert-Abgleichs, insbesondere mittels einer Mittelwertbildung, einstellbar. Dabei ist das An-/Abwinkeln des äußeren Gestängeabschnitts in Abhängigkeit von dem An-/Abwinkeln des inneren Gestängeabschnitts vorsteuerbar. Vorteilhafterweise können durch eine Mittelwertbildung Messungenauigkeiten der Sensoren, welche den inneren Gestängeabschnitten zugeordnet sind, kompensiert werden.

In einer weiteren bevorzugten Ausführungsform ist ein An-/Abwinkeln des äußeren Gestängeabschnitts derart vorsteuerbar, dass ein An-/Abwinkeln des äußeren Gestängeabschnitts unmittelbar auf eine Neigungsverstellung oder dem An-/Abwinkeln des inneren Gestängeabschnitts einleitbar ist. Dies hat den Vorteil, dass möglichst gleichzeitig auf eine Auslenkung des inneren Gestängeabschnitts oder eine Neigungsverstellung des Verteilergestänges durch das An-/Abwinkeln des äußeren Gestängeabschnitts reagiert werden kann. Demnach kann das Verteilergestänge schnellstmöglich wieder in eine möglichst parallele Lage zum Boden gebracht werden.

In einer besonders bevorzugten Ausführungsform ist ein An-/Abwinkeln des äußeren Gestängeabschnitts derart vorsteuerbar, dass ein An-/Abwinkeln des äußeren Gestängeabschnitts unabhängig von einem mittels eines zugehörigen Sensors ermittelten Abstand des äußeren Gestängeabschnitts zum Boden einleitbar ist. Dies bedeutet, dass ein An-/Abwinkeln des äußeren Gestängeabschnitts auch erfolgen kann, wenn basierend auf dem Messsignal des Sensors, welcher dem äußeren Gestängeabschnitt zugeordnet oder an dem äußeren Gestängeabschnitt angeordnet ist, keine Verschwenkung des äußeren Gestängeabschnitts erforderlich ist. Das vorgesteuerte An-/Abwinkeln des äußeren Gestängeabschnitts kann unabhängig und jederzeit eingeleitet werden. Dadurch kann erreicht werden, dass sich die Gestängeabschnitte der Ausleger je nach einer auftretenden unerwünschten Auslenkung bereits tendenziell in die notwendige Richtung zur Kompensation der Auslenkung bewegen.

Vorzugsweise ist ein An-/Abwinkeln des äußeren Gestängeabschnitts, basierend auf einem gemessenen Signal des Sensors, welcher dem äußeren Gestängeabschnitt zugeordnet ist, oder einem anderweitig ermittelten Ist-Wert mittels eines Soll-Ist-Wert-Abgleichs einstellbar. Mit anderen Worten kann generell das An-/Abwinkeln des äußeren Gestängeabschnitts mittels eines Soll-Ist-Wert-Abgleichs geregelt werden. Dabei können die Signale des Sensors, welcher dem äußeren Gestängeabschnitt zugeordnet ist, in einem generellen Regelsystem als Ist-Wert zur Anpassung eines Soll-Werts verwendet werden.

Insbesondere kann vorgesehen sein, dass die Regelung anhand des IstWertes für den äußeren Gestängeabschnitts kann immer die Vorsteuerung bspw. aufgrund einer Neigungsänderung übersteuern. Damit wird verhindert, dass ein Signal der Vorsteuerung dazu führen kann, dass es zu einem Kontakt mit dem Boden oder Bestand kommt, obwohl die Regelung des Abstandes dies verhindert hätte.

Dabei kann die Datenverarbeitungseinheit derart konfiguriert sein, oder, anders gesagt, ein derartiges Regel- und/oder Auswerteprogramm aufweisen, dass, basierend auf dem gemessenen Signal des Sensors als Eingangsgröße für die Regelung durch eine Sollwert Anpassung ein entsprechendes Stellsignal für die Stelleinrichtung des äußeren Gestängeabschnitts generiert wird. Das vorgesteuerte An-/Abwinkeln des äußeren Gestängeabschnitts kann dabei unabhängig von der Regelung des An-/Abwinkelns des äußeren Gestängeabschnitts erfolgen.

Im Rahmen der vorliegenden Anmeldung wird weiterhin ein landwirtschaftliches Nutzfahrzeug zum Ausbringen von Material, wie Düngemittel, Pflanzenschutzmittel oder Saatgut, mit einem Steuer- und/oder Regelsystem nach einer der vorhergehenden Ausführungsformen beansprucht.

Weiterhin wird im Rahmen der vorliegenden Anmeldung ein Verfahren zur Steuerung und/oder Regelung eines landwirtschaftlichen Nutzfahrzeuges beansprucht, welches ein Steuer- und/oder Regelsystem und ein Verteilergestänge zum Ausbringen von Material, wie Düngemittel, Pflanzenschutzmittel oder Saatgut umfasst, welches sich quer zur Fahrtrichtung erstreckt, und ein Mittelteil und zwei mit dem Mittelteil verbundene seitliche Ausleger mit mehreren zueinander in Transportstellung einklappbaren und in Arbeitsstellung ausklappbaren, durch Gelenke verbundene Gestängeabschnitte. Zwei benachbarte, durch Gelenke verbundene Gestängeabschnitte umfassen einen inneren und äußeren Gestängeabschnitt in Bezug auf das Mittelteil. Das Mittelteil ist zur Höhenverstellbarkeit des Verteilergestänges entlang einer vertikalen Achse bewegbar angeordnet. Weiterhin ist jedem Gestängeabschnitt wenigstens eine Stelleinrichtung zugeordnet, wodurch der jeweilige Gestängeabschnitt um eine horizontale Achse schwenkbar ist. Dem Verteilergestänge sind ferner mehrere Sensoren zur Ermittlung des Abstandes des Mittelteils und des jeweiligen Gestängeabschnitts zum Boden zugeordnet und das System weist weiterhin eine Datenverarbeitungseinheit auf, welche derart konfiguriert ist, dass die Signale der Sensoren verarbeitet werden und auf deren Basis ein Stellsignal für die jeweilige Stelleinrichtung generiert wird. Ein An-/Abwinkeln des äußeren Gestängeabschnitts wird in Abhängigkeit von einer Neigungsverstellung des Verteilergestänges und/oder einem An-/Abwinkeln des inneren Gestängeabschnitts vorgesteuert, derart, dass das An-/Abwinkeln des äußeren Gestängeabschnitts an die Neigungsverstellung oder das An-/Abwinkeln des inneren Gestängeabschnitts gekoppelt wird.

Weiter vorzugsweise erfolgt das vorgesteuerte An-/Abwinkeln des äußeren Gestängeabschnitts in entgegengesetzter Richtung zu der Neigungsverstellung des Verteilergestänges oder dem An-/Abwinkeln des inneren Gestängeabschnitts.

Vorteilhafterweise wird das vorgesteuerte An-/Abwinkeln des äußeren Gestängeabschnitts von einer Regelung der Neigungsverstellung des Verteilergestänges oder dem An-/Abwinkeln des inneren Gestängeabschnitts unabhängig eingeleitet.

In einer weiteren Ausführungsform wird die Neigungsverstellung des Verteilergestänges basierend auf einem gemessenen Signal der Sensoren, welche den innen liegenden Gestängeabschnitten zugeordnet sind, oder einem anderweitig ermittelten Ist-Wert mittels eines Soll-Ist-Wert-Abgleichs eingestellt und das An-/Abwinkeln des äußeren Gestängeabschnitts wird in Abhängigkeit von der Neigungsverstellung vorgesteuert.

Weiter vorzugsweise wird das An-/Abwinkeln des inneren Gestängeabschnitts basierend auf einem gemessenen Signal der Sensoren, welche den jeweiligen innen liegenden Gestängeabschnitten zugeordnet sind, oder einem anderweitig ermittelten Ist-Wert mittels eines Soll-Ist-Wertabgleichs, insbesondere mittels einer Mittelwertbildung, eingestellt und das An-/Abwinkeln des äußeren Gestängeabschnitts wird in Abhängigkeit von dem An-/Abwinkeln des inneren Gestängeabschnitts vorgesteuert.

Vorteilhafterweise wird ein An-/Abwinkeln des äußeren Gestängeabschnitts derart vorgesteuert, dass ein An-/Abwinkeln des äußeren Gestängeabschnitts unmittelbar auf eine Neigungsverstellung oder dem An-/Abwinkeln des inneren Gestängeabschnitts eingeleitet wird.

Weiter vorzugsweise wird ein An-/Abwinkeln des äußeren Gestängeabschnitts derart vorgesteuert, dass ein An-/Abwinkeln des äußeren Gestängeabschnitts unabhängig von einem mittels eines zugehörigen Sensors ermittelten Abstands des äußeren Gestängeabschnitts zum Boden eingeleitet wird. Es kann also eine Vorsteuerung des An-/Abwinkelns des äußeren Gestängeabschnitts eingeleitet werden, ohne dass eine derartige Lageänderung des äußeren Gestängeabschnitts durch einen mittels eines Sensors dieses Gestängeabschnitts ermittelten Ist-Wert angezeigt wäre.

In einer weiteren Ausführungsform wird ein An-/Abwinkeln des äußeren Gestängeabschnitts basierend auf einem gemessenen Signal des Sensors, welcher dem äußeren Gestängeabschnitt zugeordnet ist, oder einem anderweitig ermittelten Ist-Wert mittels eines Soll-Ist-Wert-Abgleichs eingestellt.

Zu den Vorteilen des Verfahrens zur Steuerung und/oder Regelung eines landwirtschaftlichen Nutzfahrzeuges wird auf die im Zusammenhang mit dem Steuer- und/oder Regelsystem erläuterten Vorteile verwiesen. Darüber hinaus kann das Verfahren alternativ oder zusätzlich einzelne oder eine Kombination mehrerer zuvor in Bezug auf das Steuer- und/oder Regelsystem genannte Merkmale aufweisen.

Die Erfindung wird nachstehend mit weiteren Einzelheiten unter Bezug auf die beigefügten schematischen Zeichnungen näher erläutert. Die dargestellten Ausführungsformen stellen Beispiele dar, wie das erfindungsgemäße Steuer- und/oder Regelsystem ausgestaltet sein kann. Darin zeigen
- Fig. 1: eine schematische Prinzipdarstellung eines Steuer- und/oder Regelsystems gemäß einem ersten erfindungsgemäßen Ausführungsbeispiel;
- Fig. 2: eine schematische Prinzipdarstellung eines Steuer- und/oder Regelsystems gemäß einem zweiten erfindungsgemäßen Ausführungsbeispiel;
- Fig. 3: eine schematische Prinzipdarstellung eines Steuer- und/oder Regelsystems gemäß einem dritten erfindungsgemäßen Ausführungsbeispiel;
- Fig. 4: eine schematische Prinzipdarstellung eines Steuer- und/oder Regelsystems gemäß einem vierten erfindungsgemäßen Ausführungsbeispiel.

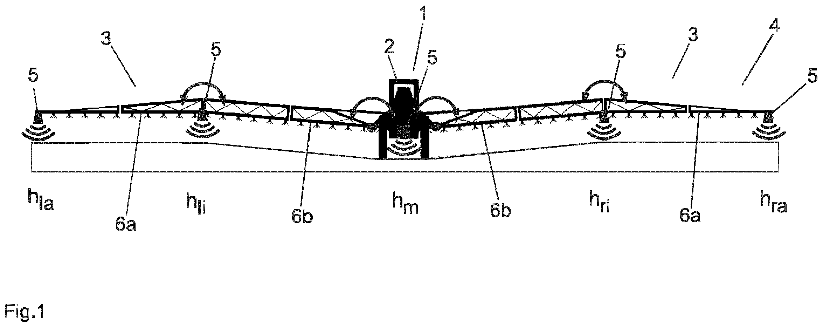

Fig. 1 zeigt eine schematische Prinzipdarstellung eines Steuer- und/oder Regelsystems für ein landwirtschaftliches Nutzfahrzeug 1 gemäß einem ersten erfindungsgemäßen Ausführungsbeispiel. Das Nutzfahrzeug umfasst ein Steuer- und/oder Regelsystem und ein Verteilergestänge 4 zum Ausbringen von Material, wie Düngemittel, Pflanzenschutzmittel oder Saatgut, welches sich quer zur Fahrtrichtung erstreckt. Das Verteilergestänge 4 weist ein Mittelteil 2 und zwei mit dem Mittelteil 2 durch Gelenke verbundene seitliche Ausleger 3 auf. Die seitlichen Ausleger 3 umfassen jeweils zwei zueinander in Transportstellung einklappbare und in Arbeitsstellung ausklappbare, durch Gelenke verbundene Gestängeabschnitte 6a, b. Beispielhaft umfasst jeder Ausleger 3 einen äußeren Gestängeabschnitt 6a und einen benachbart liegenden inneren Gestängeabschnitt 6b in Bezug auf das Mittelteil 2. Demnach liegt der innere Gestängeabschnitt 6b näher an dem Mittelteil 2 als der äußere Gestängeabschnitt 6a.

Das Mittelteil 2 ist zur Höhenverstellbarkeit des Verteilergestänges 4 entlang einer vertikalen Achse bewegbar angeordnet. Jedem der beiden seitlichen Ausleger 3 und der Gestängeabschnitte 6a, b ist eine nicht dargestellte hydraulische Einrichtung zugeordnet, wodurch der jeweilige Gestängeabschnitt 6a, b und damit auch der jeweilige seitliche Ausleger 3 um eine horizontale Achse schwenkbar ist. Jedem Gestängeabschnitt 6a, b und dem Mittelteil 2 ist jeweils ein Sensor 5 zugeordnet, bzw. an diesem angeordnet. Die Sensoren 5 sind zur Ermittlung des Abstandes des Mittelteils 2 und des jeweiligen Gestängeabschnitts 6a, b zum Boden ausgebildet. Insbesondere können die Sensoren 5 beispielhaft als Ultraschall- oder Radarsensoren ausgebildet sein. Die Sensoren 5 sind an der Unterkante des jeweiligen Auslegers 3 und des Mittelteils 2 angebracht. Alternativ können die Sensoren auch oben an den Auslegern 3 angeordnet sein, was hinsichtlich einer Verhinderung von Beschädigungen der Sensoren durch Kollisionen und auch hinsichtlich der Verunreinigung mit Spritzmitteln vorteilhaft sein kann. Die Sensoren 5 können den aktuellen Abstand des jeweiligen Gestängeabschnitts 6a, b und des Mittelteils 2 zum zu bearbeitenden Boden messen.

Der gemessene Abstand zum Boden wird für den linksseitigen äußeren Gestängeabschnitt 6a beispielhaft durch die Höhe hₗₐ und äquivalent für den linksseitigen inneren Gestängeabschnitt 6b mit der Höhe hₗᵢ definiert. Gleiches gilt für den rechtsseitigen Ausleger 3 mit der Höhe hᵣᵢ für den rechtsseitigen inneren Gestängeabschnitt 6b und hᵣₐ für den rechtsseitigen äußeren Gestängeabschnitt 6a. Der gemessene Abstand zum Boden des Mittelteils 2 wird zur Veranschaulichung beispielhaft durch die Höhe hₘ definiert.

Weiterhin weist das System eine nicht dargestellte Datenverarbeitungseinheit auf, welche derart konfiguriert ist, dass die Signale der Sensoren 5 verarbeitet werden und auf deren Basis ein Stellsignal für die jeweilige nicht dargestellte hydraulische Einrichtung generiert wird. Dabei werden die Signale der Sensoren 5 als Ist-Werte verarbeitet und zur Anpassung an einen Soll-Abstand ein Stellsignal für die jeweilige hydraulische Einrichtung generiert. Hierzu kann die Datenverarbeitungseinheit ein Auswerteprogramm aufweisen und generell als computergestütztes System gebildet sein. Die Messsignale der Sensoren 5 können generell über Kabelverbindungen oder kabellos an die Datenverarbeitungseinheit übertragen werden.

Beispielhaft wird zur Höhenregelung des Verteilergestänges 4 der Ist-Wert des Mittelteils 2, nämlich die Höhe hₘ, von dem zugehörigen Sensor 5 erfasst und mittels eines Soll-Ist-Wert-Abgleichs angepasst. Je nach der vorhandenen Regeldifferenz zwischen dem Soll-Wert und dem Ist-Wert der Höhe hₘ kann das Verteilergestänge 4 zur Höhenverstellbarkeit angehoben oder abgesenkt werden. Dazu ist dem Mittelteil 2 zur Höhenverstellbarkeit eine nicht dargestellte hydraulische Einrichtung zugeordnet.

Weiterhin ist ein An-/Abwinkeln des jeweiligen äußeren Gestängeabschnitts 6a in Abhängigkeit von einer Neigungsverstellung des Verteilergestänges 4 oder einem An-/Abwinkeln des inneren Gestängeabschnitts 6b vorsteuerbar. Dabei ist das An-/Abwinkeln des äußeren Gestängeabschnitts 6a an die Neigungsverstellung oder das An-/Abwinkeln des inneren Gestängeabschnitts 6b gekoppelt.

Die nicht dargestellte hydraulische Einrichtung, welche jedem Ausleger 3 und jedem Gestängeabschnitt 6a, b, sowie dem Mittelteil 2 zugeordnet ist, kann vorteilhafterweise einen Hydraulikzylinder, insbesondere einen doppelt wirkenden Hydraulikzylinder, eine Hydraulikleitung, welche zur Zufuhr von Hydraulikflüssigkeit an den Hydraulikzylinder angeschlossen ist, und wenigstens eine hydraulische Ventileinheit zur Anpassung einer Zylinderposition umfassen.

Dabei kann die wenigstens eine hydraulische Ventileinheit beispielhaft über ein Stellsignal der Datenverarbeitungseinheit eingestellt werden. Insbesondere kann bei einer vorliegenden positiven Regeldifferenz zwischen dem aktuellen Ist-Wert des Mittelteils 2 und dem gewünschten Soll-Wert die Datenverarbeitungseinheit ein Stellsignal für die zugehörige hydraulische Einrichtung des Mittelteils generieren, wodurch das Mittelteil abgesenkt wird. Im Falle einer negativen Regeldifferenz kann das Mittelteil 2 beispielhaft angehoben werden. Daher wird, basierend auf dem Stellsignal der Datenverarbeitungseinheit, eine Höhenverstellbarkeit des Verteilergestänges 3 gewährleistet.

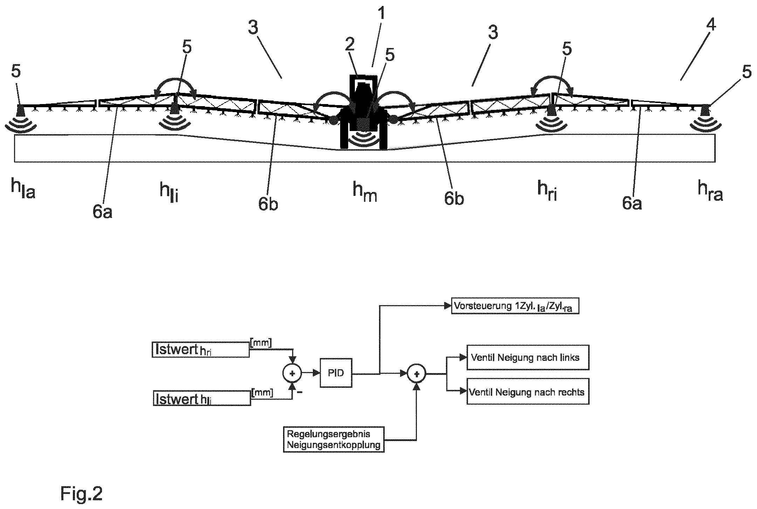

Fig. 2 zeigt eine schematische Prinzipdarstellung eines Steuer- und/oder Regelsystems nach einem weiteren erfindungsgemäßen Ausführungsbeispiel. Die Beschreibung des landwirtschaftlichen Nutzfahrzeuges 1 mit dem Mittelteil 2 und den seitlichen Auslegern 3 des Verteilergestänges 4 ist analog zur Fig. 1.

Die Sensoren 5 messen beispielhaft die Höhen hₗₐ des linken äußeren Gestängeabschnitts 6a, hₗᵢ des linken inneren Gestängeabschnitts 6b, hₘ des Mittelteils 2, hᵣᵢ des rechten inneren Gestängeabschnitts 6b und hᵣₐ des rechten äußeren Gestängeabschnitts 6a. Die Signale der Sensoren 5 bezüglich der aktuellen Ist-Werte des Abstandes des jeweiligen Gestängeabschnitts 6a, b und des Mittelteils 2 zum Boden werden an die Datenverarbeitungseinheit zur Generierung eines Stellsignals für die jeweilige hydraulische Ventileinheit zur Anpassung einer Zylinderposition des Hydraulikzylinders des jeweiligen Gestängeabschnitts 6a,b weitergeleitet.

Fig. 2 zeigt weiterhin eine schematische Prinzipdarstellung eines Regelkreises für ein Auswerteprogramm der Datenverarbeitungseinheit zur beispielhaften Neigungsverstellung des Verteilergestänges 4. Dabei wird von den Sensoren 5, welche den innen liegenden Gestängeabschnitten 6b zugeordnet sind, jeweils der Ist-Wert des linken inneren Gestängeabschnitts 6b hₗᵢ und der Ist-Wert des rechten inneren Gestängeabschnitts 6b hᵣᵢ ermittelt. Dabei kann der Ist-Wert durch den aktuellen Abstand des Gestängeabschnitts 6b zum Boden in Millimetern gebildet sein.

Die beiden Ist-Werte hₗᵢ und hᵣᵢ werden mittels eines Soll-Ist-Wert-Abgleichs an einen PID-Regler (Proportional-Integral-Derivative-Regler) zugeführt. Basierend auf der Regeldifferenz zwischen den beiden Ist-Werten, kann eine Neigungsentkopplung stattfinden. Beispielhaft kann bei einer negativen Regeldifferenz der beiden Ist-Werte, das Verteilergestänge 4 mittels der Hydraulikzylinder nach links geneigt werden. Im Falle einer positiven Regeldifferenz kann das Verteilergestänge 4 mittels der Hydraulikzylinder nach rechts geneigt werden.

Weiterhin ist ein An-/Abwinkeln der äußeren Gestängeabschnitte 6a in Abhängigkeit von der Neigungsverstellung vorsteuerbar. Beispielhaft ist ein An-/Abwinkeln des linken äußeren Gestängeabschnitts 6a und des rechten äußeren Gestängeabschnitts 6a in Abhängigkeit von der Neigungsverstellung des Verteilergestänges 4 derart vorsteuerbar, dass das An-/Abwinkeln der äußeren Gestängeabschnitte 6a an die Neigungsverstellung gekoppelt ist. Innerhalb des Regelkreises des Auswerteprogramms der Datenverarbeitungseinheit kann ein Vorsteuerwert für die Hydraulikzylinder des linken äußeren Gestängeabschnitts 6a und des rechten äußeren Gestängeabschnitts 6a nach dem Soll-Ist-Wert-Abgleich ermittelt und damit eine Vorsteuerung eingeleitet werden. Insbesondere kann bei einer Rechtsneigung des Verteilergestänges der linke äußere Gestängeabschnitt 6a abgewinkelt und der rechte äußere Gestängeabschnitt 6a angewinkelt werden.

Das vorsteuerbare An-/Abwinkeln der beiden äußeren Gestängeabschnitte 6a in Abhängigkeit von der Neigungsverstellung des Verteilergestänges 4 kann basierend auf dem gemessen Signal der Sensoren 5, welche den innen liegenden Gestängeabschnitten 6b zugeordnet sind erfolgen. Dies hat den Vorteil, dass sich die äußeren Gestängeabschnitte 6a als Reaktion auf eine Neigungsverstellung bereits tendenziell in die erforderliche Richtung zur Kompensation der auftretenden Neigung des Verteilergestänges 4 bewegen. Somit kann effizient die parallele Lage der Gestängeabschnitte 6a, b zum zu bearbeitenden Boden gehalten werden.

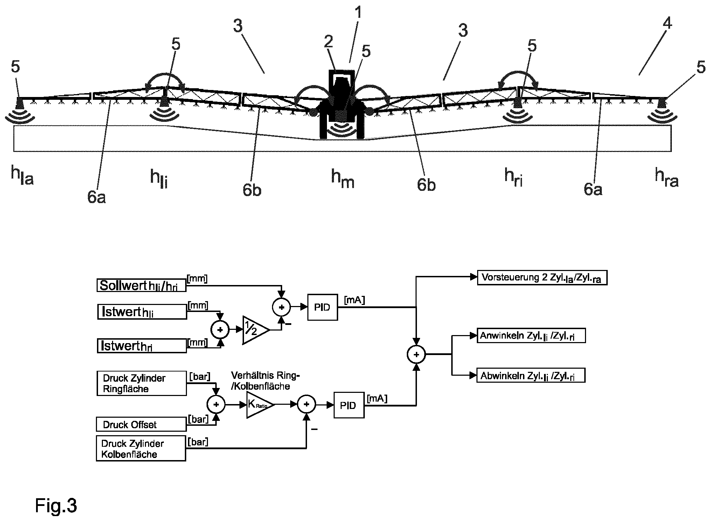

Fig. 3 zeigt eine weitere schematische Prinzipdarstellung eines Steuer- und/oder Regelsystems nach einem dritten erfindungsgemäßen Ausführungsbeispiel. Die Beschreibung des landwirtschaftlichen Nutzfahrzeuges 1 mit dem Mittelteil 2 und den seitlichen Auslegern 3 des Verteilergestänges 4 ist analog zu Fig. 2.

Im Unterschied zu Fig. 2 ist eine andere schematische Prinzipdarstellung eines Regelkreises für ein Auswerteprogramm der Datenverarbeitungseinheit zum beispielhaften An-/Abwinkeln der inneren Gestängeabschnitte 6b dargestellt. Dabei werden die Messsignale von den Sensoren 5, welche den inneren Gestängeabschnitten 6b zugeordnet sind, als Eingangsgrößen an das Auswerteprogramm übermittelt. Beispielhaft wird der aktuelle Abstand des jeweiligen inneren Gestängeabschnitts 6b zum Boden hₗᵢ und hᵣᵢ als Ist-Wert ermittelt und kann mit einem vorgegebenen Soll-Wert verglichen werden. Dabei kann eine Mittelwertbildung zwischen den gemessenen Ist-Werten des linken und rechten inneren Gestängeabschnitts 6b erfolgen. Durch die Mittelwertbildung können eventuelle Messungenauigkeiten effizient reduziert werden.

Der Unterschied bzw. die Regelabweichung zwischen dem gemittelten Ist-Wert und dem vorgegebenen Soll-Wert kann mittels eines PID-Reglers (Proportional-Integral-Derivative-Reglers) angepasst werden, um ein Stellsignal für die jeweilige hydraulische Ventileinheit der Hydraulikzylinder zum An-/Abwinkeln der inneren Gestängeabschnitte 6b zu generieren. Dabei kann das Regelergebnis des Soll-Istwert-Abgleichs mit einer Druckregelung kombiniert werden.

Für die Druckregelung kann über am Verteilergestänge 4 angeordnete nicht dargestellte Drucksensoren der Druck an der Ringfläche und an der Kolbenfläche des jeweiligen Hydraulikzylinders als Eingangsgröße ermittelt werden. Anders gesagt, kann mittels der Drucksensoren beispielhaft eine auftretende Druckänderung an den Hydraulikzylindern ermittelt werden. Bei der Messung des Drucks an der Ringfläche des Hydraulikzylinders kann weiterhin ein Druckunterschied, welcher beispielhaft durch eine externe Kraft in der Ruhelage des Verteilergestänges 4 entstehen kann, durch dessen Verwendung als Eingangsgröße für das Auswerteprogramm berücksichtigt werden. Dieser Druckunterschied oder Druckoffset kann beispielsweise aufgrund einer auftretenden Nickneigung des landwirtschaftlichen Nutzfahrzeuges 1 in oder entgegengesetzt zur Fahrtrichtung resultieren. Eine derartige Nickneigung des Nutzfahrzeuges 1 kann beispielhaft über entsprechend angeordnete Sensoren am Nutzfahrzeug 1 oder auch über die Kartendaten des zu befahrenden Bodens berücksichtigt werden.

Vorteilhafterweise ist das Verhältnis zwischen der Ring- und Kolbenfläche des Hydraulikzylinders zu berücksichtigen, um den Flächenunterschied der beiden Zylinderkammern des Hydraulikzylinders zu kompensieren. Die Kolbenfläche ist typischerweise um einen Faktor kᵣₐₜᵢₒ größer ausgebildet als die Ringfläche. Dementsprechend würde an der Ringfläche bei gleicher Kraft ein größerer Druck als an der Kolbenfläche herrschen. Somit kann der Ist-Wert des gemessenen Drucks an der Ringfläche des Zylinders mit dem Druckoffset zusammengeführt werden und mit dem Verhältnis zwischen Ring- und Kolbenfläche weiter in den Regelkreis der Druckregelung zugeführt werden. Dieser korrigierte Wert kann mit dem gemessenen Druck der Kolbenfläche des Zylinders über eine Regeldifferenz zusammengeführt werden. Die Regeldifferenz der korrigierten Drücke an Ring und Kolbenfläche kann mittels eines PID-Reglers mit dem Regelergebnis des weiter oben beschriebenen Soll-Ist-Wertabgleichs zwischen dem aktuellen Abstand der innen liegenden Gestängeabschnitte 6b vom Boden verrechnet werden.

Zur Generierung des Stellsignals für den Hydraulikzylinder zum An-/Abwinkeln des jeweiligen inneren Gestängeabschnitts 6b können demnach die Signale der Sensoren 5 mit den Signalen der Drucksensoren zusammengeführt werden. Je nach Regelabweichung kann anhand der Kennlinie der den Hydraulikzylindern zugeordneten Ventileinheit ein elektrisches Ausgangssignal für die Ventilöffnung zur Einstellung des Hydraulikdrucks am Hydraulikzylinder generiert werden. Dabei kann mittels der Kennlinie eine Umrechnung für den benötigten Ventilstrom in mA zum Einklappen oder Ausklappen bzw. zum Einfahren oder Ausfahren des Hydraulikzylinders ermittelt werden.

Unabhängig von der Regelung des An-/Abwinkelns der inneren Gestängeabschnitte 6b, ist ein An-/Abwinkeln der äußeren Gestängeabschnitte 6a derart vorsteuerbar, dass das An-/Abwinkeln der äußeren Gestängeabschnitte 6a an das An-/Abwinkeln der inneren Gestängeabschnitte 6b gekoppelt ist. Beispielhaft kann nach der Zuführung der gemessenen Ist-Werte der Sensoren 5 bezüglich des aktuellen Abstands der inneren Gestängeabschnitte 6b vom Boden und dem beschriebenen Soll-Ist-Wert-Abgleich eine Vorsteuerung des An-/Abwinkelns der äußeren Gestängeabschnitte 6a unmittelbar eingeleitet werden. Somit ist ein An-/Abwinkeln der äußeren Gestängeabschnitte 6a an ein An-/Abwinkeln der inneren Gestängeabschnitte 6b gekoppelt. Vorteilhafterweise ist die Vorsteuerung des An-/Abwinkelns der äußeren Gestängeabschnitte 6a unabhängig von dem Messignal des Sensors 5, welcher dem jeweiligen äußeren Gestängeabschnitt 6a zugeordnet ist, einleitbar.

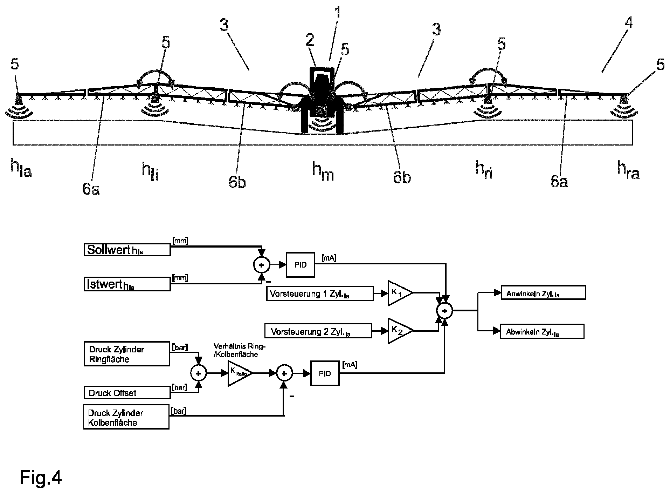

Fig. 4 zeigt eine weitere schematische Prinzipdarstellung eines Steuer- und/oder Regelsystems nach einem vierten erfindungsgemäßen Ausführungsbeispiel. Die Beschreibung des landwirtschaftlichen Nutzfahrzeuges 1 mit dem Mittelteil 2 und den seitlichen Auslegern 3 des Verteilergestänges 4 ist analog zu Fig. 2.

Im Unterschied zu Fig. 2 ist eine andere schematische Prinzipdarstellung eines Regelkreises für ein Auswerteprogramm der Datenverarbeitungseinheit zum beispielhaften An-/Abwinkeln der äußeren Gestängeabschnitte 6a dargestellt. Dabei werden die Messsignale von dem Sensor 5, welcher beispielhaft dem linken äußeren Gestängeabschnitt 6a zugeordnet ist, als Eingangsgröße an das Auswerteprogramm übermittelt. Beispielhaft wird der aktuelle Abstand des linken äußeren Gestängeabschnitts 6a zum Boden hₗₐ als Ist-Wert ermittelt und kann mit einem vorgegebenen Soll-Wert verglichen werden.

Der Unterschied bzw. die Regelabweichung zwischen dem ermittelten Ist-Wert und dem vorgegebenen Soll-Wert kann mittels eines PID-Reglers (Proportional-Integral-Derivative-Reglers) angepasst werden, um ein Stellsignal für die jeweilige hydraulische Ventileinheit des Hydraulikzylinders zum An-/Abwinkeln des äußeren Gestängeabschnitts 6a zu generieren. Dabei kann das Regelergebnis des Soll-Istwert-Abgleichs mit einer Druckregelung kombiniert werden.

Für die Druckregelung kann über am Verteilergestänge 4 angeordnete nicht dargestellte Drucksensoren der Druck an der Ringfläche und an der Kolbenfläche des jeweiligen Hydraulikzylinders als Eingangsgröße ermittelt werden. Anders gesagt, kann mittels der Drucksensoren beispielhaft eine auftretende Druckänderung an den Hydraulikzylindern ermittelt werden. Bei der Messung des Drucks an der Ringfläche des Hydraulikzylinders kann weiterhin ein Druckunterschied, welcher beispielhaft durch eine externe Kraft in der Ruhelage des Verteilergestänges 4 entstehen kann, durch dessen Verwendung als Eingangsgröße für das Auswerteprogramm berücksichtigt werden. Dieser Druckunterschied oder Druckoffset kann beispielsweise aufgrund einer auftretenden Nickneigung des landwirtschaftlichen Nutzfahrzeuges 1 in oder entgegengesetzt zur Fahrtrichtung resultieren. Eine derartige Nickneigung des Nutzfahrzeuges 1 kann beispielhaft über entsprechend angeordnete Sensoren am Nutzfahrzeug 1 oder auch über die Kartendaten des zu befahrenden Bodens berücksichtigt werden.

Vorteilhafterweise ist das Verhältnis zwischen der Ring- und Kolbenfläche des Hydraulikzylinders zu berücksichtigen, um den Flächenunterschied der beiden Zylinderkammern des Hydraulikzylinders zu kompensieren. Die Kolbenfläche ist typischerweise um einen Faktor kᵣₐₜᵢₒ größer ausgebildet als die Ringfläche. Dementsprechend würde an der Ringfläche bei gleicher Kraft ein größerer Druck als an der Kolbenfläche herrschen. Somit kann der Ist-Wert des gemessenen Drucks an der Ringfläche des Zylinders mit dem Druckoffset zusammengeführt werden und mit dem Verhältnis zwischen Ring- und Kolbenfläche weiter in den Regelkreis der Druckregelung zugeführt werden. Dieser korrigierte Wert kann mit dem gemessenen Druck der Kolbenfläche des Zylinders über eine Regeldifferenz zusammengeführt werden. Die Regeldifferenz der korrigierten Drücke an Ring- und Kolbenfläche kann mittels eines PID-Reglers mit dem Regelergebnis des weiter oben beschriebenen Soll-Ist-Wertabgleichs zwischen dem aktuellen Abstand des linken äußeren Gestängeabschnitts 6a vom Boden verrechnet werden.

Zur Generierung des Stellsignals für den Hydraulikzylinder zum An-/Abwinkeln des äußeren Gestängeabschnitts 6a kann demnach das Signal des Sensors 5 mit den Signalen der Drucksensoren zusammengeführt werden.

Beispielhaft kann bei der Zusammenführung des Regelergebnisses des beschriebenen Soll-Ist-Wert-Abgleichs bezüglich des aktuellen Abstands des äußeren Gestängeabschnitts 6a zum Boden und des Regelergebnisses der Druckregelung, eine Vorsteuerung des An-/Abwinkelns des äußeren Gestängeabschnitts 6a mit berücksichtigt werden. Dabei kann die Vorsteuerung mit einem Proportionalitätsfaktor K korrigiert werden, um beispielhaft ein unterschiedliches Größenverhältnis der Hydraulikzylinder des inneren und äußeren Gestängeabschnitts zu kompensieren. Mit anderen Worten werden die Regelergebnisse der Druckregelung und des Soll-Ist-Wert-Abgleichs mit einem Korrekturwert der Vorsteuerung kombiniert, um ein korrigiertes Stellsignal für das An-/Abwinkeln des äußeren Gestängeabschnitts 6a zu generieren. Vorteilhafterweise kann mittels der Kombination der Regelung und Vorsteuerung die Bewegung des äußeren Gestängeabschnitts 6a bereits in die wahrscheinlich notwendige Richtung zur Kompensation einer Auslenkung erreicht werden.

Hierbei ist bei der Regelung gemäß Fig. 4 vorgesehen, dass eine Vorsteuerung, welche sich aus der Neigungsregelung entsprechend Fig. 2 und eine Vorsteuerung, welche sich aus einem An-/Abwinkeln innenliegender Gestängeabschnitte 6b entsprechend Fig. 3 ergibt, kombiniert wird. Es wird also bei einer Neigungsanpassung des Gestänges und bem An-/Abwinkeln innenliegender Gestängeabschnitte jeweils ein Vorsteuersignal generiert und dann für die Ansteuerung der Hydraulikzylinder der äußeren Gestängeabschnitte, in Fig. 4 beispielhaft für den linken äußeren Gestängeabschnitt 6a, kombiniert. Je nachdem, über wie viele Gestängeabschnitte das Gestänge verfügt, können auch mehr als zwei Vorsteuerungen kombiniert werden.

Beispielhaft kann der Fall eintreten, dass die Sensoren 5 des linken äußeren und inneren Gestängeabschnitts 6a, b einen zu geringen Abstand zum Boden ermitteln. Ohne die erfindungsgemäße Vorsteuerung wäre es erforderlich, beide Gestängeabschnitte 6a, b anzuwinkeln. Da der äußere Gestängeabschnitt 6a durch das Anwinkeln des inneren Gestängeabschnitts 6b zusätzlich mit angewinkelt wird, wäre es notwendig ab einem bestimmten Zeitpunkt den äußeren Gestängeabschnitt 6a wieder abzuwinkeln, um das Verteilergestänge 4 in einer parallelen Lage zum Boden zu halten. Die erfindungsgemäße Vorsteuerung hat den Vorteil, dass aufgrund des Anwinkelns des inneren Gestängeabschnitts 6b, ein vorsteuerbares Abwinkeln des äußeren Gestängeabschnitts 6a unabhängig einleitbar ist. Somit ist es möglich, dass das Regelungsergebnis entsprechend der Vorsteuerung reduziert ist, und die Bewegung des äußeren Gestängeabschnitts 6a an die Bewegung des inneren Gestängeabschnitts 6b angepasst ist.

Mittels der kombinierten Regelung und Vorsteuerung kann erreicht werden, dass sich der äußere Gestängeabschnitt 6a als Reaktion auf eine Bewegung des inneren Gestängeabschnitts 6b bereits tendenziell in die notwendige Richtung zur Beibehaltung der parallelen Lage des Verteilergestänges 4 bewegen kann. Anders gesagt beschleunigt die Kombination der Vorsteuerung und Regelung die Bewegung des äußeren Gestängeabschnitts 6a in die wahrscheinlich notwendige Richtung.

### Bezuqszeichenliste

- 1: Landwirtschaftliches Nutzfahrzeug
- 2: Mittelteil
- 3: Ausleger
- 4: Verteilergestänge
- 5: Sensor
- 6a: äußerer Gestängeabschnitt
- 6b: innerer Gestängeabschnitt

## Patentansprüche

1. Steuer- und/oder Regelsystem für ein landwirtschaftliches Nutzfahrzeug (1), welches ein Verteilergestänge (4) zum Ausbringen von Material, wie Düngemittel, Pflanzenschutzmittel oder Saatgut umfasst, welches sich quer zur Fahrtrichtung erstreckt und ein Mittelteil (2) und zwei mit dem Mittelteil (2) durch Gelenke verbundene seitliche Ausleger (3) mit mehreren zueinander in Transportstellung einklappbaren und in Arbeitsstellung ausklappbaren, durch Gelenke verbundene Gestängeabschnitte (6a, b) aufweist, wobei zwei benachbarte durch Gelenke verbundene Gestängeabschnitte (6a, b) einen inneren (6b) und äußeren (6a) Gestängeabschnitt in Bezug auf das Mittelteil (2) umfassen, wobei das Mittelteil (2) zur Höhenverstellbarkeit des Verteilergestänges (4) entlang einer vertikalen Achse bewegbar angeordnet ist und jedem Gestängeabschnitt (6a, b) wenigstens eine Stelleinrichtung zugeordnet ist, wodurch der jeweilige Gestängeabschnitt (6a, b) um eine horizontale Achse schwenkbar ist, und wobei dem Verteilergestänge (4) mehrere Sensoren (5) zur Ermittlung des Abstandes des Mittelteils (2) und des jeweiligen Gestängeabschnitts (6a, b) zum Boden zugeordnet sind und das System eine Datenverarbeitungseinheit aufweist, welche derart konfiguriert ist, dass die Signale der Sensoren (5) verarbeitet werden und auf deren Basis ein Stellsignal für die jeweilige Stelleinrichtung generiert wird,
wobei
ein An-/Abwinkeln des äußeren Gestängeabschnitts (6a) in Abhängigkeit von einer Neigungsverstellung des Verteilergestänges (4) oder einem An-/Abwinkeln des inneren Gestängeabschnitts (6b) vorsteuerbar ist, derart, dass das An-/Abwinkeln des äußeren Gestängeabschnitts (6a) an die Neigungsverstellung und/oder das An-/Abwinkeln des inneren Gestängeabschnitts (6b) gekoppelt ist.

2. System nach Anspruch 1,
**dadurch gekennzeichnet, dass**
das vorsteuerbare An-/Abwinkeln des äußeren Gestängeabschnitts (6a) in entgegengesetzter Richtung zu der Neigungsverstellung des Verteilergestänges (4) oder dem An-/Abwinkeln des inneren Gestängeabschnitts (6b) ausgerichtet ist.

3. System nach einem der vorhergehenden Ansprüche,
**dadurch gekennzeichnet, dass**
das vorsteuerbare An-/Abwinkeln des äußeren Gestängeabschnitts (6a) von einer Regelung der Neigungsverstellung des Verteilergestänges (4) oder dem An-/Abwinkeln des inneren Gestängeabschnitts (6b) unabhängig einleitbar ist.

4. System nach einem der vorhergehenden Ansprüche,
**dadurch gekennzeichnet, dass**
die Neigungsverstellung des Verteilergestänges (4) basierend auf einem gemessenen Signal der Sensoren (5), welche den innen liegenden Gestängeabschnitten (6b) zugeordnet sind, oder einem anderweitig ermittelten Istwert mittels eines Soll-Ist-Wert Abgleichs einstellbar ist und wobei das An-/Abwinkeln des äußeren Gestängeabschnitts (6a) in Abhängigkeit von der Neigungsverstellung vorsteuerbar ist.

5. System nach Anspruch 4,
**dadurch gekennzeichnet, dass**
die Neigungsregelung des Verteilergestänges (4) basierend auf einem gemessenen Signal der Sensoren hinsichtlich einer auftretenden Druckänderung an der Stelleinrichtung und unter Berücksichtigung eines aufgrund einer Nickneigung des landwirtschaftlichen Nutzfahrzeuges (1) auftretenden Druckoffsets einstellbar ist.

6. System nach einem der vorhergehenden Ansprüche,
**dadurch gekennzeichnet, dass**
das An-/Abwinkeln des inneren Gestängeabschnitts (6b) basierend auf einem gemessenen Signal der Sensoren (5), welche den jeweiligen inneren Gestängeabschnitten (6b) zugeordnet sind, oder einem anderweitig ermittelten Istwert mittels eines Soll-Ist-Wert Abgleichs, insbesondere mittels einer Mittelwertbildung, einstellbar ist und wobei das An-/Abwinkeln des äußeren Gestängeabschnitts (6a) in Abhängigkeit von dem An-/Abwinkeln des inneren Gestängeabschnitts (6b) vorsteuerbar ist.

7. System nach einem der vorhergehenden Ansprüche,
**dadurch gekennzeichnet, dass**
ein An-/Abwinkeln des äußeren Gestängeabschnitts (6a) derart vorsteuerbar ist, dass ein An-/Abwinkeln des äußeren Gestängeabschnitts (6a) unmittelbar auf eine Neigungsverstellung oder dem An-/Abwinkeln des inneren Gestängeabschnitts (6b) einleitbar ist.

8. System nach einem der vorhergehenden Ansprüche,
**dadurch gekennzeichnet, dass**
ein An-/Abwinkeln des äußeren Gestängeabschnitts (6a) derart vorsteuerbar ist, dass ein An-/Abwinkeln des äußeren Gestängeabschnitts (6a) unabhängig von einem mittels eines zugehörigen Sensors (5) ermittelten Abstand des äußeren Gestängeabschnitts (6a) zum Boden einleitbar ist.

9. System nach einem der vorhergehenden Ansprüche,
**dadurch gekennzeichnet, dass**
ein An-/Abwinkeln des äußeren Gestängeabschnitts (6a) basierend auf einem gemessenen Signal des Sensors (5), welcher dem äußeren Gestängeabschnitt (6a) zugeordnet ist, oder einem anderweitig ermittelten Istwert mittels eines Soll-Ist-Wert Abgleichs einstellbar ist.

10. Landwirtschaftliches Nutzfahrzeug (1) zum Ausbringen von Material, wie Düngemittel, Pflanzenschutzmittel oder Saatgut, mit einem Steuer- und/oder Regelsystem nach einem der vorhergehenden Ansprüche.

11. Verfahren zur Steuerung und/oder Regelung eines landwirtschaftlichen Nutzfahrzeuges (1), welches ein Steuer- und/oder Regelsystem, und ein Verteilergestänge (4) zum Ausbringen von Material, wie Düngemittel, Pflanzenschutzmittel oder Saatgut umfasst, welches sich quer zur Fahrtrichtung erstreckt und ein Mittelteil (2) und zwei mit dem Mittelteil (2) verbundene seitliche Ausleger (3) mit mehreren zueinander in Transportstellung einklappbaren und in Arbeitsstellung ausklappbaren, durch Gelenke verbundene Gestängeabschnitte (6a, b) aufweist, wobei zwei benachbarte durch Gelenke verbundene Gestängeabschnitte (6a, b) einen inneren (6b) und äußeren (6a) Gestängeabschnitt in Bezug auf das Mittelteil (2) umfassen, wobei das Mittelteil (2) zur Höhenverstellbarkeit des Verteilergestänges (4) entlang einer vertikalen Achse bewegbar angeordnet ist und jedem Gestängeabschnitt (6a, b) wenigstens eine Stelleinrichtung zugeordnet ist, wodurch der jeweilige Gestängeabschnitt (6a, b) um eine horizontale Achse schwenkbar ist, und wobei dem Verteilergestänge (4) mehrere Sensoren (5) zur Ermittlung des Abstandes des Mittelteils (2) und des jeweiligen Gestängeabschnitts (6a, b) zum Boden zugeordnet sind und das System eine Datenverarbeitungseinheit aufweist, welche derart konfiguriert ist, dass die Signale der Sensoren (5) verarbeitet werden und auf deren Basis ein Stellsignal für die jeweilige Stelleinrichtung generiert wird,
wobei
ein An-/Abwinkeln des äußeren Gestängeabschnitts (6a) in Abhängigkeit von einer Neigungsverstellung des Verteilergestänges (4) oder einem An-/Abwinkeln des inneren Gestängeabschnitts (6b) vorgesteuert wird, derart, dass das An-/Abwinkeln des äußeren Gestängeabschnitts (6a) an die Neigungsverstellung und/oder das An-/Abwinkeln des inneren Gestängeabschnitts (6b) gekoppelt wird.

12. Verfahren nach Anspruch 11,
**dadurch gekennzeichnet, dass**
das vorgesteuerte An-/Abwinkeln des äußeren Gestängeabschnitts (6a) in entgegengesetzter Richtung zu der Neigungsverstellung des Verteilergestänges (4) oder dem An-/Abwinkeln des inneren Gestängeabschnitts (6b) erfolgt.

13. Verfahren nach einem der Ansprüche 11 oder 12,
**dadurch gekennzeichnet, dass**
das vorgesteuerte An-/Abwinkeln des äußeren Gestängeabschnitts (6a) von einer Regelung der Neigungsverstellung des Verteilergestänges (4) oder dem An-/Abwinkeln des inneren Gestängeabschnitts (6b) unabhängig eingeleitet wird.

14. Verfahren nach einem der Ansprüche 11 bis 13,
**dadurch gekennzeichnet, dass**
die Neigungsverstellung des Verteilergestänges (4) basierend auf einem gemessenen Signal der Sensoren, welche den innen liegenden Gestängeabschnitten (6b) zugeordnet sind, oder einem anderweitig ermittelten Istwert mittels eines Soll-Ist-Wert Abgleichs eingestellt wird und wobei das An-/Abwinkeln des äußeren Gestängeabschnitts (6a) in Abhängigkeit von der Neigungsverstellung vorgesteuert wird.

15. Verfahren nach einem der Ansprüche 11 bis 14,
**dadurch gekennzeichnet, dass**
das An-/Abwinkeln des inneren Gestängeabschnitts (6b) basierend auf einem gemessenen Signal der Sensoren (5), welche den jeweiligen innen liegenden Gestängeabschnitten (6b) zugeordnet sind, oder einem anderweitig ermittelten Istwert mittels eines Soll-Ist-Wert Abgleichs, insbesondere mittels einer Mittelwertbildung, eingestellt wird und wobei das An-/Abwinkeln des äußeren Gestängeabschnitts (6a) in Abhängigkeit von dem An-/Abwinkeln des inneren Gestängeabschnitts (6b) vorgesteuert wird.

16. Verfahren nach einem der Ansprüche 11 bis 15,
**dadurch gekennzeichnet, dass**
ein An-/Abwinkeln des äußeren Gestängeabschnitts (6a) derart vorgesteuert wird, dass ein An-/Abwinkeln des äußeren Gestängeabschnitts (6a) unmittelbar auf eine Neigungsverstellung oder dem An-/Abwinkeln des inneren Gestängeabschnitts (6b) eingeleitet wird.

17. Verfahren nach einem der Ansprüche 11 bis 16,
**dadurch gekennzeichnet, dass**
ein An-/Abwinkeln des äußeren Gestängeabschnitts (6a) derart vorgesteuert wird, dass ein An-/Abwinkeln des äußeren Gestängeabschnitts (6a) unabhängig von einem mittels eines zugehörigen Sensors (5) ermittelten Abstand des äußeren Gestängeabschnitts (6a) zum Boden eingeleitet wird.

18. Verfahren nach einem der Ansprüche 11 bis 17,
**dadurch gekennzeichnet, dass**
ein An-/Abwinkeln des äußeren Gestängeabschnitts (6a) basierend auf einem gemessenen Signal des Sensors (5), welcher dem äußeren Gestängeabschnitt (6a) zugeordnet ist, oder einem anderweitig ermittelten Istwert mittels eines Soll-Ist-Wert Abgleichs eingestellt wird.
